# EUROPÄISCHE PATENTANMELDUNG

(11) **EP 1 553 327 A1**
(43) Veröffentlichungstag der Anmeldung: **13.07.2005**
(21) Anmeldenummer: 04078203.9
(22) Anmeldetag: 23.11.2004
(51) Int. Cl.: F16H 19/04, H01H 3/40

(54) **Schaltmechanik**

(30) Priorität: 06.01.2004 DE 102004001795
(71) Anmelder: SIEMENS AKTIENGESELLSCHAFT, 80333 München (DE)
(72) Erfinder: Schöps, Jürgen, 13503 Berlin (DE)

(57) **Zusammenfassung**

Die vorliegende Erfindung betrifft eine Schaltmechanik für eine Schaltanlage (1) insbesondere eine Hochspannungsschaltanlage. Diese weist ein Schaltglied (2) sowie ein Antriebsglied (3) zur Linearverschiebung des Schaltgliedes in eine erste Richtung (4) oder eine zu der ersten Richtung entgegengesetzte zweite Richtung (5) und somit Realisierung unterschiedlicher Schaltzustände der Schaltanlage, auf. Das Antriebsglied (3) ist innerhalb einer Ausnehmung (6) des Schaltgliedes (2) angeordnet, wobei die Außenkontur des Antriebsgliedes (3) und die Innenkontur der Ausnehmung (6) so aufeinander abgestimmt sind, dass das Antriebsglied (3) entlang der Innenkontur so verfahrbar, dass bei fortlaufender Drehung des Antriebsgliedes in eine bestimmte Drehrichtung (7) eine selbständige Richtungsumkehr des Schaltgliedes (2) von der ersten Richtung (4) in die zweite Richtung (5) erfolgt. Erfindungsgemäß ist es somit möglich, eine von der Form her dielektrisch günstige Schaltmechanik zu schaffen, welche zudem mit einfachen steuerungstechnischen Maßnahmen betriebssicher betrieben werden kann.

## Beschreibung

Die vorliegende Anmeldung betrifft eine Schaltmechanik für die Schaltanlage, insbesondere eine Hochspannungsschaltanlage.

In Hochspannungsschaltanlagen wird mithilfe von mechanischen Schaltern das Trennen von Stromkreisen an Leitern bzw. die Erdung ermöglicht.

Die DE 196 32 574 A1 zeigt einen Trenn-Erdungsschalter für eine metallgekapselte, gasiolierte Hochspannungsschaltanlage. Diese weist einen ersten Innenleiter auf, welcher mit einem ersten festen Kontaktstück verbunden ist. Ein zum ersten Innenleiter senkrecht verlaufender zweiter Innenleiter ist mit einem zweiten Kontaktstück verbunden. Durch ein bewegliches drittes Kontaktstück kann der elektrische Kontakt zwischen dem ersten und dem zweiten Kontaktstück bei Bedarf geschlossen werden. Dieses dritte Kontaktstück stellt ein Schaltglied dar, welches über ein Antriebsglied in Form eines Zahnrades antreibbar ist. Das dritte Kontaktstück (also das Schaltglied) hat im Wesentlichen zylinderförmige Gestalt und verfügt über eine Außenverzahnung, welche von dem Antriebsglied in Form eines Zahnrades außen gekämmt wird. Das Schaltglied ist hierbei linear geführt, je nach linearer Verschiebungsrichtung (welche abhängig ist von der Antriebsrichtung des Antriebsgliedes) kommt es zu einem Öffnen bzw. Schließen des elektrischen Kontaktes zwischen erstem und zweitem Kontaktstück (und damit erstem und zweitem Innenleiter).

Diese Anlage nach dem Stand der Technik weist den Nachteil auf, dass die äußere Gestalt dielektrisch ungünstig ist, so dass es zu ungewollten Spannungsübergängen bei Hochspannungsanlagen kommen kann. Außerdem ist die Steuerung des Antriebs relativ aufwendig.

Der vorliegenden Erfindung liegt daher die Aufgabe zugrunde, eine Schaltmechanik für eine Schaltanlage zu schaffen, welche einerseits eine dielektrisch günstige Formgebung aufweist und außerdem bei Sicherstellung höchster Betriebssicherheit kostengünstig herstellbar ist.

Diese Aufgabe wird durch eine Schaltmechanik für eine Schaltanlage nach Patentanspruch 1 gelöst.

Dadurch, dass bei einer gattungsgemäßen Schaltmechanik für eine Schaltanlage das Antriebsglied innerhalb einer lang gestreckten Ausnehmung des Schaltgliedes angeordnet ist, wobei die Außenkontur des Antriebsgliedes und die Innenkontur der Ausnehmung so aufeinander abgestimmt sind, dass das Antriebsglied entlang der Innenkontur so verfahrbar ist, dass bei fortlaufender Drehung des Antriebsglieds in eine bestimmte Drehrichtung eine selbständige Richtungsumkehr des Schaltglieds von der ersten in die zweite Richtung erfolgt, wird diese Aufgabe gelöst.

Das Antriebsglied ist innerhalb einer (vorzugsweise langgestreckten) Ausnehmung des Schaltgliedes angeordnet. Als Antriebsglied kommt hier vorzugsweise ein Antriebsrad in Frage, eine Beschränkung auf kreisrunde Formen soll allerdings hiermit nicht zwingend zum Ausdruck gebracht werden. Ein Schaltglied ist ein Element, welches linear verschiebbar ist und an dem eigentlichen Schaltvorgang beteiligt ist, es handelt sich hierbei um das für den Schaltvorgang tatsächlich zu bewegende Teil. Für die Außenkontur des Antriebsgliedes und die Innenkontur der Ausnehmung des Schaltgliedes kommen unterschiedliche Kopplungsmöglichkeiten in Frage. Es bietet sich an, dass diese komplementären Teile miteinander verzahnt sind. Es ist in Abweichung hiervon allerdings auch möglich, dass eine Kopplung über Reibflächen etc. erfolgt. Wichtig ist hierbei, dass das Antriebsglied mit seiner Außenkontur entlang der Innenkontur verfahrbar ist. Dadurch, dass die Innenkontur der Ausnehmung praktisch einen geschlossenen Raum darstellt und das Antriebsglied sich entlang dieser Innenkontur "abrollt" und das Schaltglied linear geführt ist, ist eine Kinematik darstellbar, welche durch fortlaufendes Drehen des Antriebsgliedes in eine einzige Richtung einen Linearantrieb des Schaltgliedes zunächst in eine erste Richtung und nach einer Richtungsumkehr in eine hierzu entgegengesetzte zweite Richtung ermöglicht. Selbstverständlich ist es möglich, dass die Innenkontur der Ausnehmung kleine Unterbrechungen hat, welche allerdings von dem Antriebsrad überbrückbar sein sollten, so dass im Wesentlichen eine dauernde bzw. formschlüssige Verbindung zwischen Antriebsglied und Schaltglied gegeben ist.

Mit der erfindungsgemäßen Anordnung wird einerseits ermöglicht, dass die Schaltmechanik der Schaltanlage eine dielektrisch sehr günstige Form hat (dadurch dass das Antriebsglied innerhalb des Schaltgliedes angeordnet ist, "sticht" es nicht aus der Schaltmechanik heraus, so dass die äußere Form der Schaltmechanik z.B. im Wesentlichen zylinderförmig und somit dielektrisch günstig gestaltet werden kann, so dass hier zu denkbar geringen ungewünschten Spannungsübergängen kommt) .

Außerdem ist sehr günstig, dass zur Realisierung der Linearverschiebungen in zwei unterschiedliche Richtungen nicht eine Richtungsumkehr des Antriebes erfolgen muss. Hierdurch wird die Steuerung deutlich vereinfacht. Aufwendige Steuerelektronik bzw. das Vorsehen eines zusätzlichen Umkehrgetriebes ist nicht notwendig. Es ist lediglich notwendig, einen z.B. Drehantrieb vorzusehen, welcher sich lediglich in eine einzige Richtung drehen muss. Hierbei wird durch eine einfache z.B. elektronische Maßnahme, welche die Anzahl der Umdrehungen des Antriebsgliedes misst, eine eindeutige Bestimmung der Linearverschiebungsrichtung des Schaltgliedes ermöglicht. So ist es z.B. möglich, mit kommerziell erhältlichen einfachen Schrittmotoren eine solche Steuerung zu gewährleisten.

Hauptsächlich werden in Hochspannungsanlagen die Schaltstifte (wie Trenner- und Erdestifte) über Hebel angelenkt. Diese Anlenkungsart (Hebel, Umlenkhebel usw.) erfordert, bedingt durch ihre Bauart, einen hohen räumlichen Platzbedarf. Die Kontaktgehäuse, welche die Hebel aufnehmen, werden dementsprechend auch sehr groß und in ihrer Kontur, bezogen auf die Dielektrik, asymmetrisch bzw. inhomogen. Gerade in Rohrleitern mit Längstrennung der Strombahn führt diese Bauart zu großen Gehäusen. Bei dem erfindungsgemäßen Schubgetriebe handelt es sich dagegen um ein Getriebe, welches beispielsweise aus zwei Teilen besteht, einem Zahnrad, welches nur teilweise ausgebildet ist, und einem äußeren geschlossenen Zahnteil. Dieses Getriebe führt einen definierten Hub, bei einer 180°-Drehung des Zahnrades aus und kommt dann in einen so genannten "Freilauf". Bei einer Drehung über 180° wird der Hub wieder in entgegengesetzter Richtung ausgeführt. Dies hat zur Folge, dass sich der Hub jeweils nach einer 180°-Drehung ändert. Durch diese Art der Bauweise kann das Getriebe direkt in einen Hohlleiter eingebaut werden. Da es sich bei einem Hohlleiter um ein zylindrisches handelt, eignet sich diese Art des Getriebes insbesondere für Rohrleiter.

Vorteilhafte Weiterbildungen der vorliegenden Erfindung werden in den abhängigen Ansprüchen angegeben.

Eine vorteilhafte Weiterbildung sieht vor, dass das Antriebsglied fest gelagert ist. D.h., dass das Antriebsglied (beispielsweise ein bereichsweise verzahntes Zahnrad) senkrecht zum Linearantrieb nicht verschieblich ist. Dies ist z.B. realisierbar mit einer bereichsweisen Verzahnung, da sonst gleichzeitiger Eingriff an zwei gegenüberliegenden Seiten der Ausnehmung gegeben wäre. Alternativ hierzu könnte ein rundum verzahntes Zahnrad vorgesehen sein, welches allerdings dann zur Richtungsumkehr selbst verschieblich angeordnet sein müsste, dies würde die Konstruktion allerdings wieder komplizierter erscheinen lassen.

Bei der besonders vorteilhaften Weiterbildung, welche vorsieht, dass das Antriebsglied ein Zahnrad ist, wobei die Verzahnung sich allerdings nur über einen Teil des Umfangs erstreckt, ist es vorteilhaft, dass auf etwa 150° bis 170° seines Umfanges die durchgehende Verzahnung sich erstreckt und das Zahnrad im übrigen Winkelbereich unverzahnt ist. Als grobe Leitlinie kann gesagt werden, dass für den Umfangsbereich des Zahnrades 180° minus Zahnwinkel den maximalen Winkelbereich der Verzahnung angeben soll.

Eine weitere vorteilhafte Weiterbildung sieht vor, dass auch die Ausnehmung nur an einem Teil der Innenkontur eine Zahnung aufweist, wobei die Zahnung zu einer Zahnung des Antriebsgliedes (beispielsweise des teilweise verzahnten Zahnrades) komplementär ist. So entspricht die Innenkontur der Ausnehmung beispielsweise der zweimal hintereinander abgewickelten Außenkontur des Antriebsrades. D.h., dass bei einer 360°-Drehung des Antriebsgliedes bzw. Antriebsrades (feste Lagerung des Antriebesgliedes/Antriebsrades vorausgesetzt) dieses einmal die gesamte Innenkontur der Ausnehmung abfährt und hierbei das Schaltglied einmal in die erste Richtung und einmal in die zweite Richtung (also einmal hin und zurück) bewegt wird.

Eine weitere vorteilhafte Weiterbildung sieht vor, dass die Ausnehmung die Form eines Rechtecks mit an den schmalen Seiten des Rechtecks aufgesetzten Halbkreisen aufweist, wobei an den Längsseiten des Rechtecks Zähne angeordnet sind zum Eingriff in ein innerhalb der Ausnehmung angeordnetes Antriebsglied mit Zähnen. Bei dieser vorteilhaften Weiterbildung ist quasi an den gegenüberliegenden Längsseiten jeweils eine Verzahnung angegeben, welche komplementär zu dem Verzahnungsbereich eines teilweise verzahnten Zahnrades gebildet ist. Im Bereich der endseitigen Halbkreiszonen ist keine Verzahnung vorgesehen, dies entspricht dem unverzahnten Bereich des Zahnrades.

Eine weitere vorteilhafte Weiterbildung sieht vor, dass das Schaltglied über mindestens einen Schaltstift zur Kontaktierung von Hochspannungsleitern bzw. einem Erdungskontakt verfügt. Hiermit ist es möglich, mit der erfindungsgemäßen Schaltmechanik einerseits Hochspannungsleiter miteinander zu verbinden oder auch einzelne Hochspannungsleiter mit einem Erdungskontakt zu verbinden. Hierbei ist es besonders vorteilhaft, dass das Schaltglied zwei Schaltstifte aufweist, welche im Wesentlichen linear fluchtend an zwei entgegengesetzten Seiten des Schaltgliedes in Richtung der gewünschten Linearverschiebung angeordnet sind. Dies ist insbesondere für die dielektrisch günstige Umgebung der Schaltanlage vorteilhaft.

Eine weitere vorteilhafte Weiterbildung sieht vor, dass Schaltglied und Antriebsglied in einem zu der Schaltanlage gehörenden Hohlzylinder angeordnet sind, wobei das Innere des Hohlzylinders so gestaltet ist, dass es die lineare Führung des Schaltgliedes ermöglicht. Die hohlzylindrische Form bietet sich insbesondere aus Gründen der günstigen Dielektrizitätseigenschaften an, d.h., dass z.B. keine spitzen Kanten etc. mögliche ungewollte Spannungsübergänge bewirken können. Dieser Hohlzylinder kapselt die gesamte zum Schaltglied gehörende Mechanik, hierin ist einerseits eine Linearführung des Schaltgliedes gegeben, des Weiteren wird auch das Antriebsglied, welches innerhalb der Ausnehmung des Schaltgliedes angeordnet ist, ebenfalls hiervon gekapselt.

Eine besonders vorteilhafte Weiterbildung sieht vor, dass die Schaltmechanik in einer Hochspannungsanlage untergebracht ist. Hier bietet sich wiederum die dielektrisch günstige Formgebung an, außerdem ist es günstig, dass die Steuerungsmechanik bzw. -elektronik für einen Motor des Antriebsgliedes relativ kleinbauend und einfach gehalten werden kann.

Weiter vorteilhafte Weiterbildungen werden in den übrigen Ansprüchen angegeben.

Die Erfindung wird nun anhand mehrerer Figuren erläutert. Es zeigen:
- Fig. 1: eine perspektivische Ansicht einer erfindungsgemäßen Schaltmechanik, sowie
- Fign. 2a bis 2c: drei verschiedene Schaltzustände einer erfindungsgemäßen Schaltmechanik.

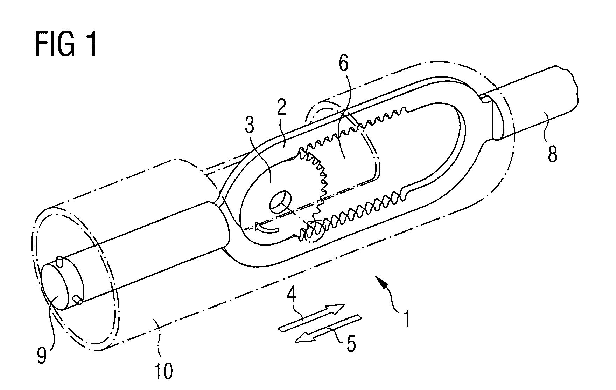

Fig. 1 beschreibt eine erfindungsgemäße Schaltmechanik 1. Diese weit ein Schaltglied 2 mit einer darin angeordneten Ausnehmung 6 auf. Das Schaltglied 2 ist im Inneren eines Hohlzylinders 10 linear geführt. Innerhalb der Ausnehmung 6 ist ein Antriebsglied 3 in Form eines Zahnrades fest in dem Hohlzylinder 10 gelagert. Somit sind Schaltglied 2 und Antriebsglied 3 in einem zu der Schaltmechanik gehörenden Hohlzylinder 10 angeordnet, wobei das Innere des Hohlzylinders so gestaltet ist, dass es die lineare Führung des Schaltgliedes ermöglicht.

Die Schaltmechanik inklusive Hohlzylinder 10 ist in einer Hochspannungsanlage untergebracht, wobei die gesamte Schaltanlage in einer Isoliergasumgebung (beispielsweise kommt als Gas Schwefelhexafluorid zum Einsatz) umgeben ist mit einem Überdruck von beispielsweise 5 bar.

An den Enden des Schaltgliedes 2 sind rechts- und linksseitig jeweils Schaltstifte angebracht (rechtsseitig Schaltstift 8, linksseitig Schaltstift 9). Diese Schaltstifte sind im Wesentlichen zylindrisch angeordnet und fluchtend zu einer ersten Bewegungsrichtung 4 des Schaltgliedes bzw. einer dazu entgegengesetzten zweiten Richtung 5 des Schaltgliedes. Die Schaltstifte können mit entsprechenden Innenleitern einer Hochspannungsanlage verbunden werden. So kann z.B. in der in Fig. 1 gezeigten Position, in welcher der Schaltstift 8 herausgefahren ist, ein bestimmter Innenleiter kontaktiert werden, welcher dann z.B. über den Hohlzylinder einen bestimmten Stromfluss ermöglicht. Alternativ könnte beispielsweise der Schaltstift 9 in seiner voll in Richtung 5 ausgefahrenen Position dazu dienen, eine entsprechende Erdung herzustellen, indem der Schaltstift 9 mit einem Erdungskontakt verbunden wird.

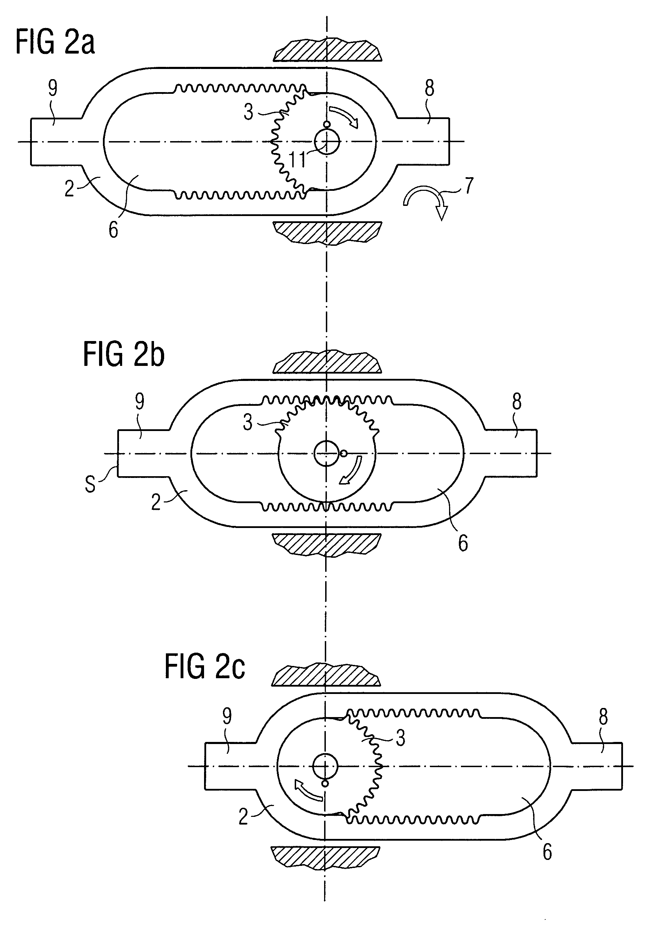

Im Folgenden wird nochmals näher auf die Funktion der erfindungsgemäßen Schaltanlage 1 eingegangen, wobei die drei verschiedenen Schaltzustände anhand der Fign. 2a bis 2c erklärt werden.

Fign. 2a bis 2c zeigen einen schematischen Querschnitt der in Fig. 1 gezeigten Schaltmechanik in drei verschiedenen Schaltzuständen.

Hieraus wird klar, dass es sich um eine Schaltmechanik 1 handelt, welche ein Schaltglied 2 sowie ein Antriebsglied 3 zur Linearverschiebung des Schaltgliedes in eine erste Richtung 4 oder eine zu der ersten Richtung entgegengesetzte zweite Richtung und somit zur Realisierung unterschiedlicher Schaltzustände der Schaltmechanik zeigt. Das Antriebsglied 3 ist innerhalb einer lang gestreckten Ausnehmung 6 des Schaltgliedes 2 angeordnet, wobei die Außenkontur des Antriebsgliedes 3 und die Innenkontur der Ausnehmung 6 so aufeinander abgestimmt sind, dass das Antriebsglied 3 entlang der Innenkontur so verfahrbar ist, dass bei fortlaufender Drehung des Antriebsglieds in eine bestimmte Drehrichtung 7 eine selbständige Richtungsumkehr des Schaltgliedes von der ersten Richtung 4 in die zweite Richtung 5 erfolgt.

Aus Fig. 2a wird außerdem klar, dass das Antriebsglied 3 in Form eines teilweise verzahnten Zahnrades um ein festes Lager 11 drehbar ist. Bei dem Antriebsglied 3 handelt es sich um ein Zahnrad, welches auf 150° bis 170° seines Umfangs eine durchgehende Verzahnung aufweist und in dem übrigen Winkelbereich unverzahnt ist.

In dem unverzahnten Bereich ist der Radius des Antriebsrades so gewählt, dass er in Fig. 2a (bzw. auch in der Fig. 2c) gezeigten Lage im Wesentlichen formschlüssig in einen entsprechenden unverzahnten Endabschnitt der Ausnehmung 6 eingreift.

Auch die Ausnehmung 6 weist hierzu nur an einem Teil der Innenkontur eine Zahnung auf, wobei die Zahnung zu der Zahnung des Antriebsgliedes 3 komplementär ist. In Fign. 2a bis 2c ist für den Fachmann erkennbar, dass die Innenkontur der Ausnehmung 6 der zweimal abgewickelten Außenkontur des Antriebsgliedes entspricht. Dies bedeutet eine 360°-Drehung des Antriebsgliedes 3 in Drehrichtung 7.

Die Ausnehmung 6 weist im Wesentlichen die Form eines Rechteckes auf mit an den schmalen Seiten des Rechteckes gesetzten halbkreisförmigen Enden, wobei sie an den Längsseiten des Rechtecks 10 angeordnet sind zum Eingriff in ein innerhalb der Ausnehmung 6 angeordnetes Antriebsglied mit Zähnen.

So befindet sich in Fig. 2a das Schaltglied 2 in seinem linken Totpunkt, d.h. in der am weitest möglichen linksseitigen Stellung. Hiervon ausgehend wird bei einer Drehrichtung 7 des Antriebsgliedes 3 der in Fig. 2a oberste Zahn des Antriebsgliedes 3 anfangen die an der Längsseite der Ausnehmung 6 befindliche Zahnstange zu kämmen. Da das Lager 11 feststehend ist, führt dies zu einer Bewegung des Antriebsgliedes 2 nach rechts.

In der in Fig. 2b gezeigten Lage zeigt sich das Schaltglied in einer Mittestellung bezüglich der Fign. 2a und 2c. Kommt es hier zu einer noch weiteren Drehung des Antriebsgliedes 3 in Drehrichtung 7, ergibt sich die rechte Totpunktlage, wie in Fig. 2c gezeigt. Hierbei greift der unverzahnte Umfangsabschnitt des Antriebsgliedes 3 im Wesentlichen formschlüssig in den komplementären Endabschnitt der Ausnehmung 6 des Schaltgliedes 2 ein. In dieser Lage gerät die Zahnung des Antriebsgliedes außer Eingriff mit der Zahnung an der oberen Längsseite der Ausnehmung 6. Gleichzeitig hierzu beginnt die Zahnung des Antriebsgliedes 3, beginnend mit dem in Fig. 2c zuunterst gezeigtem Zahn des Antriebsgliedes 3 die Zahnung an der unteren Längsseite der Ausnehmung 6 zu kämmen, so dass es hier zu einer Rückbewegung in Richtung 5 kommt, bis die in Fig. 2a gezeigte Totpunktlage wieder erreicht ist.

Der große Vorteil dieser Erfindung liegt u.a. darin, dass durch Drehung des Antriebsgliedes 3 in einer einzigen Richtung eine alternierende Bewegung (in linearer erster Richtung 4 bzw. entgegengesetzter linearer Richtung 5) möglich wird. Hierdurch wird es kostengünstig und betriebssicher möglich, z.B. mittels eines Schrittmotors eine sichere Schaltung von Betriebszuständen der Schaltanlage zu gewährleisten. Selbstverständlich ist es jedoch auch möglich, das Antriebsglied 3 in zwei verschiedene Drehrichtungen anzutreiben (also beispielsweise in Drehrichtung 7 und in die entgegengesetzte Drehrichtung), wenn dies erforderlich sein sollte.

### Bezugszeichenliste

- 1: Schaltmechanik
- 2: Schaltglied
- 3: Antriebsglied
- 4: erste Richtung
- 5: zweite Richtung
- 6: Ausnehmung
- 7: Drehrichtung
- 8: Schaltstift
- 9: Schaltstift
- 10: Hohlzylinder
- 11: Lager

## Patentansprüche

1. Schaltmechanik für eine Schaltanlage (1), insbesondere Hochspannungsschaltanlage, wobei die Schaltmechanik ein Schaltglied (2) sowie ein Antriebsglied (3) zur Linearverschiebung des Schaltgliedes in eine erste Richtung (4) oder eine zu der ersten Richtung entgegengesetzte zweite Richtung (5) und somit Realisierung unterschiedlicher Schaltzustände der Schaltanlage enthält,
**dadurch gekennzeichnet ,dass**
das Antriebsglied (3) innerhalb einer Ausnehmung (6) des Schaltgliedes (2) angeordnet ist, wobei die Außenkontur des Antriebsglieds (3) und die Innenkontur der Ausnehmung (6) so aufeinander abgestimmt sind, dass das Antriebsglied (3) entlang der Innenkontur so verfahrbar ist, dass bei fortlaufender Drehung des Antriebsglieds in eine bestimmte Drehrichtung (7) eine selbstständige Richtungsumkehr des Schaltgliedes (2) von der ersten Richtung (4) in die zweite Richtung (5) erfolgt.

2. Schaltmechanik nach Anspruch 1, **dadurch gekennzeichnet, dass** das Antriebsglied (3) fest gelagert ist.

3. Schaltmechanik nach einem der vorhergehenden Ansprüche, **dadurch gekennzeichnet, dass** das Antriebsglied (3) ein Zahnrad ist, wobei sich die Verzahnung allerdings nur über einen Teil des Umfangs erstreckt.

4. Schaltmechanik nach Anspruch 3, **dadurch gekennzeichnet, dass** das Antriebsglied (3) auf etwa 150°-170° seines Umfanges eine durchgehende Verzahnung aufweist und in dem übrigen Winkelbereich unverzahnt ist.

5. Schaltmechanik nach einem der vorhergehenden Ansprüche, **dadurch gekennzeichnet, dass** die Ausnehmung (6) nur an einem Teil der Innenkontur eine Zahnung aufweist, wobei die Zahnung zu einer Zahnung des Antriebsglieds (3) komplementär ist.

6. Schaltmechanik nach einem der vorhergehenden Ansprüche, **dadurch gekennzeichnet, dass** die Ausnehmung (6) die Form eines Rechteckes mit an den schmalen Seiten des Rechteckes aufgesetzten Halbkreisen aufweist, wobei an den Längsseiten des Rechtecks Zähne angeordnet sind zum Eingriff in ein innerhalb der Ausnehmung (6) angeordnetes Antriebsglied mit Zähnen.

7. Schaltmechanik nach einem der vorhergehenden Ansprüche, **dadurch gekennzeichnet, dass** das Schaltglied (2) über mindestens einen Schaltstift (8, 9) zur Kontaktierung von Hochspannungsleitern oder von einem Erdungskontakt verfügt.

8. Schaltmechanik nach Anspruch 7, **dadurch gekennzeichnet, dass** das Schaltglied (2) zwei Schaltstifte (8, 9) aufweist, welche im Wesentlichen linear fluchtend an zwei entgegengesetzten Seiten des Schaltgliedes (2) in Richtung (4, 5) der gewünschten Linearverschiebung angeordnet sind.

9. Schaltmechanik nach einem der vorhergehenden Ansprüche, **dadurch gekennzeichnet, dass** Schaltglied (2) und Antriebsglied (3) in einem zu der Schaltanlage gehörenden Hohlzylinder (1c) angeordnet sind, wobei das Innere des Hohlzylinders so gestaltet ist, dass es die lineare Führung des Schaltgliedes ermöglicht.

10. Schaltmechanik nach einem der vorhergehenden Ansprüche, **dadurch gekennzeichnet, dass** diese in einer Hochspannungsschaltanlage untergebracht ist, insbesondere in einer druckbehafteten Isoliergasumgebung einer Hochspannungsschaltanlage.
